# EUROPÄISCHE PATENTSCHRIFT

(11) **EP 1 681 798 B1**
(45) Veröffentlichungstag und Bekanntmachung des Hinweises auf die Patenterteilung: **01.10.2008**
(21) Anmeldenummer: 05000936.4
(22) Anmeldetag: 18.01.2005
(51) Int. Cl.: H04L 12/24, G06F 11/34

(54) **Wahlfreies Logging**
Facultative logging
Logging facultatif

(43) Veröffentlichungstag der Anmeldung: 19.07.2006
(73) Patentinhaber: Nokia Siemens Networks GmbH & Co. KG, 81541 München (DE)
(72) Erfinder: Renz, Marco, 17498 Hinrichshagen (DE)

(56) Entgegenhaltungen:
- US-A- 5 067 107
- US-A1- 2003 018 619

## Beschreibung

In dem internationalen Standard M.3010 (02/2000) der ITU-T ist eine Referenzarchitektur eines Telecommunications Management Network (TMN) zur Überwachung und Steuerung eine Netzes für Telekommunikationsanwendungen beschrieben, bei der davon ausgegangen wird, dass das von dem TMN gesteuerte Netz unterschiedliche Typen von Netzelementen umfasst, die üblicherweise mit Hilfe von unterschiedlichen Kommunikationsmechanismen (d.h. Protokollen, Meldungen, Management Informationen - auch Objektmodell genannt) gesteuert werden.

Dieses TMN umfasst folgende Funktionalitäten:
- Operations Systems Function (OSF), die das "eigentliche" Management des Telekommunikationsnetzes realisiert.
- Workstation Function (WSF), die zur Darstellung der Steuervorgänge und des Netzzustandes für einen menschlichen Anwender des TMN dient.
- Network Element Function (NEF), die eine Schnittstelle zur Steuerung der Telekommunikations-Funktionen der Netzelemente darstellt. Die Schnittstelle definiert den spezifischen Kommunikationsmechanismus des jeweiligen Netzelements, der ggf. nicht standardisiert ist. Die Summe aller Management Informationen des NE wird als Management Information Base (MIB) des NE bezeichnet. Sie wird im weiteren auch NE-MIB genannt.
- Transformation Function (TF), die zur Verbindung von Komponenten mit unterschiedlichen Kommunikationsmechanismen und insbesondere zur Anbindung von Netzelementen, die keine standardisierte NEF aufweisen, an das TMN eingesetzt wird. Sie wird in dem Standard M.3010 (05/96) auch als Mediation Function bzw. als Q-Adaption Function bezeichnet.

Des Weiteren werden die Funktionalitäten entsprechend des FCAPS Schemas, soweit möglich, in folgende Gruppen klassifiziert:
F = Fault
C = Configuration
A = Accounting
P = Performance
S = Security

Die Funktionen werden durch gegenständliche Erzeugnisse - auch Produkte genannt - bewirkt, die beispielsweise als Netzelement (NE), Operations System (OS), Terminal, Router, Switch oder Datenbankserver ausgebildet sein können, aber selbstverständlich nicht auf diese beschränkt sind.

Die Produkte können auch als Computerprogrammprodukte (auch Programm, Applikationen oder Software genannt) ausgebildet sein, die von Hardware (z.B. zumindest ein Prozessor) ausgeführt werden, von der die sichtbare, gegenständliche Ausführungsumgebung der Produkte gebildet wird. Diese Ausführung wird häufig von Supportsoftware (z.B. Multitasking bzw. Multithreading Betriebssystem, Datenbanksystem, Windows System) unterstützt.

Die Funktion NEF ist üblicherweise einem NE zugeordnet, während die Funktionen OSF und WSF meist einem OS zugeordnet sind. Üblicherweise ist einem OS eine Vielzahl von NE zugeordnet, wobei das OS meist zentralisiert ist, während die NE in dem Netz dezentral auf eine Vielzahl von Standorten verteilt sind.

Ein derart genormtes Gesamtsystem kann infolge der genormten Schnittstellen und Abläufe besonders leicht nicht nur als integriertes Produkt realisiert und verkauft werden, sondern auch als ein System mehrerer, von unterschiedlichen Herstellern getrennt realisierter und verkaufter Produkte, die jeweils einen Teil der genormten Gesamtfunktionalität durchführen und so zusammenwirken, dass insgesamt die gleiche Funktionalität realisiert wird wie bei einer integrierten Realisierung der genormten Funktionalität. Die Produkte können beispielsweise als Managementapplikationen zur Steuerung unterschiedlicher Netztechnologien eines Kommunikationsnetzes ausgebildet sein, von denen jeweils eine für die jeweils gesteuerte Technologie relevante, applikationsspezifische Teilmenge der Resourcen des Netzes modelliert, visualisiert und gesteuert wird. Sie sind aber nicht auf Produkte für Kommunikationssysteme beschränkt.

Die Umsetzung der beschriebenen Architektur in konkrete Lösungen ist infolge der Verteiltheit des Systems und der Vielzahl an unterschiedlichen Systemkomponenten und Anforderungen eine komplexe technische Problemstellung.

Dokument US2003/018619 offenbart ein System zum Schreiben von Daten in Logdateien. Abhängig von der Wichtigkeit der zu schreibenden Daten, wird ein Logeintrag in mehreren Logdateien gespeichert, so dass wichtigere Logeinträge für einen längeren Zeitraum erhalten bleiben.

Es ist Aufgabe der Erfindung, zumindest eines der bestehenden Probleme zu erkennen und durch Angabe von zumindest einer Lehre zum technischen Handeln zu lösen.

Die Erfindung beruht auf folgenden Erkenntnissen:
- Eine Fehlersuche ist in einem verteilten System besonders schwierig, da Fehler, die in einer Systemkomponente zu Tage treten, ihre Ursache nicht nur lokal, sondern auch in abgesetzten Komponenten oder in der Übermittlung zwischen den Systemen haben können.
- Darüber hinaus hängt die Reproduzierbarkeit eines Fehlers oft nicht nur von der lokalen Konfiguration der betroffenen Systemkomponente ab, sondern auch von den jeweiligen Zuständen abgesetzter Systemkomponenten und des zwischengeschalteten Übermittlungsnetzes. Es kann vorkommen, dass ein Fehler auch bei identischem Zustand der lokalen Systemkomponente nicht reproduzierbar ist, weil der exakte Zustand der anderen Komponenten und insbesondere der zeitliche Ablauf der einzelnen Ereignisse in dem Gesamtsystem nicht identisch reproduziert werden kann.
- Für die Diagnose eines bestimmten Fehlers ist es oft erforderlich, sowohl möglichst umfangreiche und detaillierte Daten zum Zeitpunkt des Fehlers zu haben als auch einen möglichst langen Blick in die Vergangenheit, aus dem z.B. Speicherverbrauch, der Systemstatus und wichtige Ereignisse ersichtlich werden sowie andere Ereignisse, die möglicherweise in ursächlichem Zusammenhang mit dem zu untersuchenden Fehler stehen.
- Vor diesem Hintergrund kommt Logfiles, in denen das aktuelle Geschehen mitprotokolliert wird, eine besondere Bedeutung zu, da sie oft die einzige verlässliche Quelle sind, aus der eine Fehlerursache herausgefunden werden kann.
- Bei Logfiles gibt es einen inhärenten Zielkonflikt. Zum einen möchte man möglichst alle Ereignisse protokollieren, um ein vollständiges Bild der Vergangenheit zu erhalten. Dies führt zu Logfiles, die sehr schnell gefüllt werden. Zum anderen möchte man möglichst wenige Daten sammeln, damit der vorhandene Speicherplatz langsam verbraucht wird und folglich ein sehr langer Blick in die Vergangenheit ermöglicht wird.

Die bekannten Techniken lösen die erkannte Problematik nicht oder haben zumindest unerwünschte Nebeneffekte:
- Bekannt ist, bei Erreichen einer maximalen Größe eines Logfiles das Logging zu stoppen. Damit erhält man einen Blick in die Vergangenheit, der auf ein bestimmtes, nach Abschluss des Loggings konstantes Zeitfenster begrenzt ist.
- Bei der Wrap-Around Technologie wird ein Logfile ebenfalls bis zu einer maximalen Größe gefüllt. Im Anschluss wird das Logging jedoch nicht gestoppt, sondern das Logfile unter Beibehaltung der maximalen Größe von vorne beginnend überschrieben, so dass mit jedem Schreibvorgang schrittweise die jeweils ältesten Daten gelöscht werden. Somit erhält man einen zeitlich begrenzten Blick auf die jeweils unmittelbar vorausgehende Vergangenheit.
- Durch Filter kann man Länge und Genauigkeit des Blicks in die Vergangenheit einstellen. Dabei ist der Blick in die Vergangenheit entweder genau und dafür relativ kurz, oder ungenau und dafür relativ lang. Man muss vor Beginn des Loggings entscheiden, ob weniger Daten gespeichert und somit ein relativ langer Zeitraum abgedeckt werden soll, oder ob detaillierte Daten gespeichert und somit nur ein relativ kurzer Zeitraum überwacht werden soll, wobei im Falle eines Wrap-Aroud Loggings ältere, und eventuell sehr wichtige Daten relativ schnell überschrieben werden.
- Die Entscheidung, welchen Filter man verwenden sollte, kann meist nicht vorab getroffen werden, vor allem wenn Ursache und Zeitpunkt des Auftretens eines Fehlers unbekannt sind.

Eine Lösung für die erfindungsgemäß erkannte Problemsituation sowie vorteilhafte Ausgestaltungen dieser Lösung sind in den Patentansprüchen angegeben, die ebenfalls der Beschreibung der Erfindung dienen und mithin Teil der Beschreibung sind.

Die Erfindung wird nachfolgend anhand von Ausführungsbeispielen, die auch in den Figuren dargestellt sind, erläutert. Es sei betont, dass die aufgezeigten Ausführungen der Erfindung trotz ihrer teilweise sehr detailgetreuen Darstellung lediglich beispielhafter Natur und nicht einschränkend zu verstehen sind. Es zeigt die
- Figur: eine beispielhafte erfindungsgemäße Lösung zur wahlfreien Speicherung von Daten A,B,C,D einer Applikation P in Logfiles L.

Als eine Lösung für die erfindungsgemäß erkannte Problemstellung wird vorgeschlagen, zumindest zwei Logfiles L₁,L₂ vorzusehen und die Daten A,B,C,D der Applikation P wahlfrei entweder in keinem, in einem einzigen oder in beiden Logfiles L₁, L₂ zu speichern.

Besonders schöne Vorteile ergeben sich dabei, wenn sporadisch auftretende Daten A,B (z.B. interne Fehler A oder Anwenderaktionen B) beispielsweise in beiden Logfiles L₁,L₂ und detaillierte und mithin häufiger auftretende Daten C (z.B. Funktionsaufrufe C) nur in einem der beiden Logfiles L₁,L₂ - beispielsweise dem zweiten Logfile L₂ - gespeichert werden. Mit Hilfe des ersten Logfiles L₁ wird dann ein relativ langer, aber vergleichsweise ungenauer Blick in die Vergangenheit und mit Hilfe des zweiten Logfiles L₂ ein zwar kürzerer, aber dafür genauerer Rückblick ermöglicht. Mit Hilfe der in beiden Logfiles L₁, L₂ gespeicherten Daten A,B ist trotz der Speicherung in unterschiedlichen Logfiles L eine Korrelation der in den beiden Logfiles L₁,L₂ gespeicherten Daten A,B,C, möglich.

Die wahlweise Speicherung der Daten C in Logfile L₂, nicht aber in Logfile L₁ wird beispielsweise dadurch erreicht, dass jedem der beiden Logfiles L je ein logfilespezifischer Filter F vorgeschaltet ist, wobei die Daten A,B,C jedem der Filter F zugeführt werden, wodurch funktionell ein Multiplexer M realisiert wird. Der dem Logfile L₁ zugeordnete Filter F₁ ist so konfiguriert, dass nur die Daten A,B, nicht aber die Daten C und auch nicht die Daten D im Logfile L₁ gespeichert werden. Der dem Logfile L₂ zugeordnete Filter F₂ ist hingegen so konfiguriert, dass mit Ausnahme der Daten D alle Daten A,B,C in dem Logfile L₂ gespeichert werden.

Bevorzugt werden die nicht gespeicherten Daten D von einem dem Multiplexen auf die Filter F vorgeschalteten Summenfilter S abgefangen und nicht den Filtern F zugeführt. Damit entfällt der Aufwand, die Daten D erst jedem der Filter F zuzuführen, nur um dann bei jedem Filter F individuell zu entscheiden, dass die Daten D doch nicht gespeichert werden sollen.

Bei dieser Ausführung wird zumindest das zweite Logfile L₂ bevorzugt in einem wrap-around Modus betrieben, da es wegen der detaillierten Daten C vergleichsweise schnell sehr groß werden wird. Das zweite Logfile L₂ wird solange befüllt, bis der zu untersuchende Fehler aufgetreten ist. Im unmittelbaren Anschluss wird das Logging gestoppt. So erhält man einen sehr aktuellen Blick auf die unmittelbar vor dem Auftritt des Fehlers liegende Vergangenheit.

Alternativ können die Daten A,B in beiden Logfiles L₁,L₂, die Daten C nur in Logfile L₁ und die Daten D nur in Logfile L₂ gespeichert werden. Vorteilhaft können damit für unterschiedliche Fehler, die meist von unterschiedlichen Teams analysiert werden, in sich vollständige Logfiles L erstellt werden. Es ist weder eine nachträgliche Korrelation mehrerer Logfiles L erforderlich, noch eine vorherige Abstimmung, welche Logfiles erstellt werden sollen.

Im weiteren wird eine Ausführung der Erfindung erläutert, bei der die Erfindung als Computerprogrammprodukt verkörpert ist, bei dem die Daten A,B,C,D einer Applikation P erfindungsgemäß in Logfiles L gespeichert werden. Zur erleichterten Lesbarkeit ist die Applikation P nicht als Maschinenprogramm, sondern als C-Programmcode wiedergegeben, wodurch die Erfindung natürlich nicht auf die Darstellung begrenzt wird. Die Erläuterung der Erfindung sind als mit "//" gekennzeichnete Kommentare in den C-Programmcode eingefügt.

Bei dieser Ausführung ist die Applikation P so gestaltet, dass die Daten A,B,C,D dauerhaft getract werden. Mit dieser Fallgestaltung ist der Vorteil verbunden, dass zur Aktivierung und Deaktivierung des Tracings keine erneute Compilierung der Applikations P erforderlich ist. Im Gegenzug ist es wünschenswert, das wahlfreie Logging möglichst aufwandsarm umzusetzen, damit die Durchführung des Computerprogrammprodukts durch die vielfach in der Applikation P angeordneten Traceanweisungen nicht über Gebühr verlangsamt wird.

```
 //---------------------------------------------------------
 // Applikation P.cpp
 //---------------------------------------------------------

 void P::P()
 {
    // beispielhafter Aufruf eines Trace:
    // die ersten beiden Argumente dienen zur Klassifikation
    // der Daten A,B,C,D. Die nächsten beiden Argumente sind
    // der Name der Klasse und der Funktion. Im letzten
    // Argument steht ein beliebiger Text, der für wahlfreie
    // Kommentare genutzt werden kann
    TT_TRACE
      ( DID
      ' 7
      ' "P"
      ' "P"
      ' "nur zur Demonstration"
      );
 }

 //---------------------------------------------------------
 // TT TRACE ist ein Makro mit nachfolgendem Programmcode
 //---------------------------------------------------------

 if ( TTInternal::isConfigured ( DID , 7 ) )
    // isConfigured ist eine beispielhafte Realisierung
    // eines Summenfilters S. Es wird geprüft, ob zumindest
    // ein Logfile mit Level 7 für die Domain DID existiert.
    // Falls dies nicht der Fall ist, wird der nachfolgende
    // Programmcode writeLine() nicht ausgeführt und somit
    // eine Zuführung der Daten zu den Filtern F verhindert

 {
    TTInternal::writeLine
      ( DID
      , 7
      , _FILE_
      , _LINE_
      , "P"
      , "P"
      , "nur zur Demonstration"
      );
 }
 //---------------------------------------------------------
 // Beispielhafte Implementierung von isConfigured (...)
 // (= Summenfilter S)
 //---------------------------------------------------------

 // domainId (DID) adressiert einen Eintrag in m_configArray
 // logLevel (7) adressiert ein einzelnes bit

 // domainId, logLevel und m_configArray sind Konstanten, die
 // dem Compiler aus dem statischen Aufruf aus TTInternal
 // bekannt sind.
 // Der Compiler kann dies zu lediglich 3 Assemblerbefehlen
 // übersetzen. Dies sind inline, d.h. es sind keine Sprung-
 // befehle zu Subfunktionen erforderlich.
 bool isConfigured
    ( TTDefinitions::DomainId domainId
    , TTDefinitions::LogLevel logLevel
    ) const
 {
    return
    ( 0 != ( m_configArray[domainId] & ( 1 « logLevel ) ) )
    ;
 }

 //---------------------------------------------------------
 // Beispielhafte Implementierung von writeLine (...)
 //---------------------------------------------------------

 void TTInternal::writeLine
    ( TTDefinitions::DomainId domainId
    , TTDefinitions::LogLevel logLevel
    , TTDefinitions::LevelId levelId
    , TTDefinitions::TraceString fileName
    , unsigned long lineNumber
    , TTDefinitions::TraceString className
    , TTDefinitions::TraceString functionName
    , TTDefinitions::TraceString freeText
    )
 {
    InstanceList& instanceList = getInstanceList();
    InstanceList::iterator it;

    // instanceList enthält eine Liste aller Logfiles L

    // it ist ein Iterator, mit dessen Hilfe in der nach-
    // folgenden Schleifen die Daten allen in der Liste
    // hinterlegten Logfiles L zugeführt werden.
    // Die Schleife ist eine mögliche Realisierung des
    // Multiplexers M
    for
    ( it = instanceList.begin()
    ; it != instanceList.end()
    ; ++it
    )
    {

         TTInstance* pInstance = *it;

         // für jedes Logfile wird zunächst geprüft, ob es
         // zur Zeit überhaupt aktiviert ist.

         if ( pInstance->isActive() )
         {

              // Im Anschluss wird vor jeder Speicherung
              // in ein Logfile mit einem Filter F geprüft,
              // ob die Daten geschrieben werden soll
              // Diese Prüfung erfolgt in Abhängigkeit von
              // separat gespeicherten Konfigurations-
              // dateien, mit denen die Konfiguration der
              // Filter F beschrieben wird.

              // Im vorliegenden Beispiel erfolgt eine
              // Speicherung, falls Domain DID und Level 7
              // im Filter F eingestellt sind

              if
              ( pInstance->getConfigFile().isConfigured
                    (domainId
                   , logLevel
                   )
              )
              {
                   pInstance->getLogFile().writeLine
                    ( TTDefinitions::getDomainName(domainId)
                   ' TTDefinitions::getLevelName(levelId)
                   ' fileName
                   ' lineNumber
                   ' className
                   ' functionName
                   ' freeText);
              }
         }
    }
 }
```

Die in den Konfigurationsdateien beschriebene Konfiguration der Filter wird bei Durchführung des Computerprogrammprodukts nach zeitgemäßem Stand der Technik beispielsweise im Speicher eines Rechners abgelegt. Der dadurch belegte Speicherplatz ist dem Adressraum des Computerprogrammprodukts zugeordnet. Der Zugriff auf diese im Speicher hinterlegten Konfigurationsdaten erfolgt in der Routine isConfigured(...) über die Anweisung
( m_configArray[domainId] & ( 1 << logLevel ) )

Zur wahlweisen Änderung dieser Konfigurationsdaten ist beispielsweise eine weitere Applikation vorgesehen, die z.B. über einen parallelen Thread ebenfalls Zugriff auf den Speicherplatz hat. Mit Hilfe dieser Applikation werden geänderte Konfigurationsdateien erneut in dem Speicherplatz hinterlegt. Dies hat zu Folge, dass die geänderte Konfiguration der Filter F ab dem Zeitpunkt, an dem die Hinterlegung in dem Speicher erfolgt, wirksam wird, ohne dass dazu die Durchführung des erfindungsgemäßen Computerprogrammprodukts unterbrochen werden muss oder eine Anpassung des Computerprogrammprodukts erforderlich wird.

Mit der Erfindung ist eine Vielzahl von weiteren Vorteilen verbunden:
- Durch paralleles Speichern ausgewählter Daten in mehreren Logfiles können die Daten dieser Logfiles einfach miteinander korreliert werden.
- Es können mehrere unterschiedliche Logfiles erzeugt werden, von denen unterschiedliche Anforderungen an den Inhalt der Logfile jeweils in vollem Umfang erfüllt werden. Dies ist ein besonders schöner Vorteil, wenn nur wenig Zeit für die Analyse einer Applikation P zur Verfügung steht und mehrere Fehler gleichzeitig analysiert werden. Dies ist z.B. dann der Fall, wenn die Applikation P bereits beim Kunden im Betrieb ist und nur nachts analysiert werden kann, da sie tags trotz der Fehler eingesetzt wird. Zu jedem Fehler können dann während der knapp bemessenen Zeit gleichzeitig mehrere Familien von Logfiles erstellt werden, wobei in jeder Familie alle für den jeweiligen Fehler relevanten Daten enthalten sind. So kann jeder Fehler vollständig aus einer einzigen Familie von Logfiles analysiert werden. Eine zeitaufwändige und komplexe Abstimmung und nachträgliche Korrelation der Logfiles unterschiedlicher Familien entfällt.
- Eine Umsetzung der Erfindung erfordert keine prinzipiellen Änderungen des bisherigen Standes der Technik, sondern lässt sich grundsätzlich nachträglich als Baustein - insbesondere als modifiziertes oder zusätzliches Computerprogrammprodukt - einfügen.
- Der Zeitpunkt der Realisierung ist unabhängig von dem Zeitpunkt der Realisierung anderer Funktionen.
- Mit der Erfindung wird sichergestellt, dass die einzelnen Komponenten des Gesamtsystems nur in geringem Maße belastet werden und damit die Stabilität des Gesamtsystems erhöht wird.

Abschließend sei darauf hingewiesen, dass die Beschreibung der für die Erfindung relevanten Komponenten des Systems grundsätzlich nicht einschränkend in Hinblick auf eine bestimmte physikalische Realisierung oder Zuordnung zu verstehen ist. Für einen einschlägigen Fachmann ist insbesondere offensichtlich, dass die Erfindung teilweise oder vollständig in Software und über mehrere physikalische Erzeugnisse / Computerprogrammprodukte verteilt realisiert werden kann.

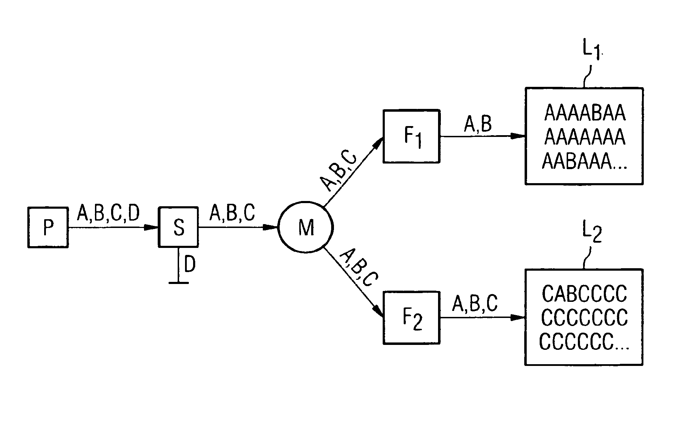

## Patentansprüche

1. Verfahren zum Logging von Daten (A, B, C, D) mit zumindest zwei Logfiles, wobei ein erster Teil (A, B) der Daten in beiden Logfiles und ein zweiter Teil (C) der Daten nur im zweiten Logfile gespeichert wird,
**dadurch gekennzeichnet,**
**dass** die in den Logfiles gespeicherten Daten (A, B, C, D) mit Hilfe der in beiden Logfiles gespeicherten Daten (A, B) korreliert werden.

2. Verfahren nach Anspruch 1,
bei dem das zweite Logfile in einem wrap-around Modus betrieben wird.

3. Verfahren nach einem der vorstehenden Ansprüche,
bei dem die Daten als intern aufgetretene Fehler (A), als Anwenderaktionen (B) - insbesondere Mouseclick oder Menuauswahl - oder als Funktionsaufrufe (C) ausgebildet sind.

4. Verfahren nach einem der vorstehenden Ansprüche,
bei dem die wahlfreie Speicherung mit Hilfe von Filtern (F) bewirkt wird, die den Logfiles vorgeschaltet sind, wobei die Daten jedem der Filter zugeführt werden.

5. Verfahren nach dem vorstehenden Anspruch,
bei dem den Filtern eine Summenfilter (S) vorgeschaltet ist, von dem die Zuführung der Daten zu den Filtern verhindert wird, wenn die Daten in keinem der Logfiles gespeichert werden sollen.

6. Erzeugnis, umfassend Mittel, die zur Durchführung aller Schritte eines Verfahrens nach einem der vorstehenden Verfahrensansprüche eingerichtet sind.

7. Erzeugnis nach dem vorstehenden Erzeugnisanspruch, ausgebildet als Computerprogrammprodukt, dessen Programmcode von zumindest einem Prozessor ausgeführt wird.

## Claims

1. Method for logging data (A, B, C, D) using at least two logfiles, wherein a first portion (A, B) of the data is stored in both logfiles and a second portion (C) of the data is stored only in the second logfile,
**characterized**
**in that** the data (A, B, C, D) stored in the logfiles are correlated using the data (A, B) stored in both logfiles.

2. Method according to Claim 1,
in which the second logfile is operated in a wrap-around mode.

3. Method according to one of the preceding claims,
in which the data are in the form of faults (A) which have occurred internally, in the form of user actions (B) particularly a mouse click or menu selection - or in the form of function calls (C).

4. Method according to one of the preceding claims,
in which the random storage is effected using filters (F) which are connected upstream of the logfiles, the data being supplied to each of the filters.

5. Method according to the preceding claim, in which the filters have a sum filter (S) connected upstream of them which prevents the data from being supplied to the filters when the data are not supposed to be stored in any of the logfiles.

6. Product, comprising means which are set up to perform all the steps of a method according to one of the preceding method claims.

7. Product according to the preceding product claim, in the form of a computer program product whose program code is executed by at least one processor.

## Revendications

1. Procédé de journalisation de données (A, B, C, D) avec au moins deux fichiers journaux, une première partie (A, B) des données étant enregistrée dans les deux fichiers journaux et une deuxième partie (C) des données n'étant enregistrée que dans le deuxième fichier journal, **caractérisé en ce que** les données (A, B, C, D) enregistrées dans les fichiers journaux sont corrélées à l'aide des données (A, B) enregistrées dans les deux fichiers journaux.

2. Procédé selon la revendication 1, dans lequel le deuxième fichier journal est exploité dans un mode wrap-around.

3. Procédé selon l'une des revendications précédentes, dans lequel les données se présentent sous la forme d'erreurs (A) qui surviennent en interne, d'actions d'utilisateurs (B), en particulier clic de souris ou sélection de menu, ou d'appels de fonctions (C).

4. Procédé selon l'une des revendications précédentes, dans lequel l'enregistrement facultatif est effectué à l'aide de filtres (F) qui sont situés en amont des fichiers journaux, les données étant amenées à chacun des filtres.

5. Procédé selon la revendication précédente, dans lequel est situé, en amont des filtres, un filtre sommateur (S) qui empêche l'amenée des données aux filtres lorsque les données ne doivent être enregistrées dans aucun des fichiers journaux.

6. Produit comprenant des moyens qui sont aménagés pour exécuter toutes les étapes d'un procédé selon l'une des revendications précédentes.

7. Produit selon la revendication précédente, réalisé sous la forme d'un produit de programme informatique dont le code de programme est exécuté par au moins un processeur.
